# EUROPEAN PATENT SPECIFICATION

(11) **EP 0 995 664 B1**
(45) Date of publication and mention of the grant of the patent: **14.01.2004**
(21) Application number: 99203377.9
(22) Date of filing: 14.10.1999
(51) Int. Cl.: B62D 21/12, B60G 25/00, B60G 7/02

(54) **Axle suspension for a vehicle with air spring system**
Achsaufhängung für ein Fahrzeug mit einem Luftfedersystem
Suspension d'un essieu pour un véhicule comportant un système à ressort pneumatique

(30) Priority: 23.10.1998 NL 1010383
(43) Date of publication of application: 26.04.2000
(73) Proprietor: Weweler Nederland B.V., 7332 AP Apeldoorn (NL)
(72) Inventor: Aalderink, Derk Geert, 7245 NV Laren (NL); Bramer, Hans, 6961 WR Eerbeek (NL)
(74) Representative: Iemenschot, Johannes Andreas, Ir.

(56) References cited:
- EP-A- 0 231 761
- EP-A- 0 421 556
- EP-A- 0 773 119
- EP-A- 0 822 106
- EP-A- 0 890 501
- DE-A- 2 725 599
- FR-A- 2 000 650
- US-A- 2 633 203
- US-A- 2 901 240
- US-A- 3 829 115

## Description

The invention relates to an axle suspension for a vehicle. EP-A-0 890 501 (NL-A-1006567), which is cited under Article 54(3) EPC, describes an axle suspension for a vehicle, more particularly for a vehicle with an air spring system, comprising two brackets which are each attached to a longitudinal chassis beam, are connected to one another from below by a cross beam and are each provided with a hinge bolt for an arm which supports the vehicle axis, and a tightenable strut-rod element, which runs at an angle towards the longitudinal chassis beam bearing the other bracket and engages in the vicinity of each bracket, at a point which is located in the vicinity of the connection between said bracket and the cross beam.

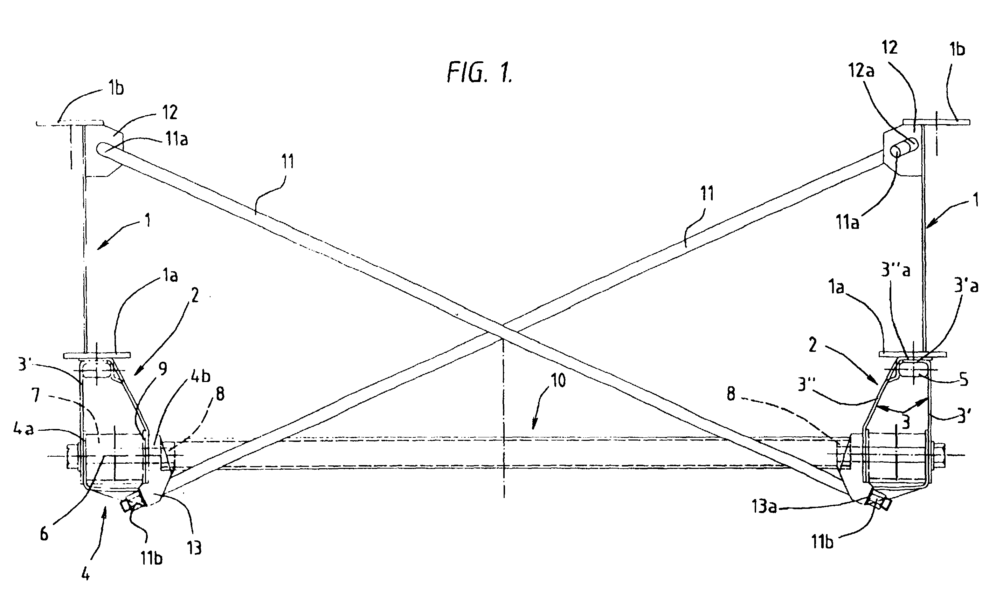

In this axle suspension, both ends of the cross beam are either welded from below to the front side of the brackets, which have been moulded and/or welded to form a single piece (Figs. 1a, b and Fig. 5), or secured between the two brackets from below by means of bolts (Fig. 5). In all three of these embodiments, the strut elements engage on the cross beam at the ends.

The object of the invention is to provide an improved axle suspension of the type referred to above which, in particular, offers better distribution of forces and/or transmission of forces to the vehicle chassis, combined with simplified mounting.

According to the invention, this object is achieved by means of the features of claim 1.

By designing the bottom section of the brackets (also known as "spring carriers") in the form of a substantially U-shaped closure piece, it is possible, in a simple manner, to realize the various functions which have to be fulfilled by the various parts of the bracket (spring carrier) with regard to absorbing and transmitting forces. Thus, the U-shaped closure piece in which the spring arm is mounted can be designed as a robust moulding or forging, while the rest of the bracket, which forms the connection between the closure piece and the relevant longitudinal chassis beam and only has to absorb vertical forces and horizontal forces which are directed in the longitudinal direction of the vehicle, can be of relatively lightweight design.

By also providing the U-shaped closure piece with an integrally moulded engagement projection for a strut element, it is possible to connect the U-shaped closure piece to the closure piece of the opposite bracket (spring carrier) and the cross beam positioned between them, so as to form a rigid unit, without additional connecting components being required between the brackets and the cross beam. In this case, the moment which may be produced when the strut elements are tightened is absorbed by the U-shaped closure pieces.

To ensure that the cross beam is positioned correctly between the two closure pieces and that a connection which is locked against undesirable rotary movements is obtained, according to a further characteristic of the invention, the mutually facing flanges of the two closure pieces are provided, on their outer surfaces, with elevations and/or recesses which are complementary to the ends of the unround cross beam.

A simple bracket or spring carrier design is obtained by the fact that each closure piece is secured with each of its flanges on a plate-like bracket part which hangs down from the relevant longitudinal chassis beam.

There are various possible options for connecting the U-shaped closure piece to the plate-like bracket parts.

A practical possibility which avoids having to make weld joints consists in the closure-piece flanges being attached to the respective plate-like bracket parts by means of the hinge bolts.

Further features and advantages of the invention are explained in more detail below with reference to the drawing, which illustrates a number of exemplary embodiments.
Figure 1 shows a cross section through the chassis of a lorry at the location of the axle suspension and viewed in the normal direction of travel;
Figure 2 shows a perspective view of the spring carrier structure used in the embodiment shown in Figure 1, in the dismantled state;
Figure 3A shows a variant of the spring carrier structure shown in Figure 2, in the assembled state and seen from the front;
Figure 3B shows a perspective view of the spring carrier structure shown in Figure 3A, in the dismantled state, and
Figure 4 shows a variant of the axle suspension shown in Figure 1.

In Figure 1, two longitudinal beams of a vehicle, which are designed as I-beams, are denoted by 1.

A bracket or spring carrier 2 is attached to the bottom flange 1a of each chassis beam 1.

The spring carriers 2 each comprise a top section 3 and a bottom, substantially U-shaped closure piece 4. The top spring-carrier section 3 is composed of two bracket plates 3' and 3" which hang down from the relevant longitudinal beam 1 and, in side view, are in the shape of a trapezium, the long parallel side of which lies at the top. The bracket plates 3' and 3" are each provided, on their top side, with a narrow flange 3'a or 3"a, respectively, which is bent over at right-angles and faces towards the opposite bracket plate, which flanges engage over one another and are provided with coinciding holes which lie on a single longitudinal row and are intended for connecting bolts (not shown in more detail in the drawing), by means of which the spring carrier is screwed securely to the relevant flange 1a.

The outer bracket plate 3' is in this case in a vertical position, while the top section of the inner bracket plate 3 " runs obliquely towards the outer bracket plate 3', as seen in the upwards direction, resulting in a relatively narrow connecting zone between the spring carrier 2 and the relevant longitudinal beam 1.

It can also be seen from the drawing (Figure 1) that the inclined section of the inner bracket plate 3'' is pressed inwards locally, specifically in the vicinity of one end, resulting in a wall section which is parallel to the opposite, outer bracket plate 3' so that a tubular part 5, which is able to serve as an engagement point for a shock absorber, can be placed between them.

The closure pieces 4 comprise dimensionally rigid mouldings or forgings and, in the exemplary embodiment shown in Figure 1, are positioned with their flanges 4a and 4b directed upwards. In this case, at each spring carrier 2 the outer bracket plate 3' is attached to the outside of the outer flange 4a of the closure piece 4, while the inner bracket plate 3'' bears against the inside of the inner flange 4b of the closure piece 4.

To attach the bracket plates 3' and 3'' to the relevant closure piece 4, use is made of the hinge bolt 6, which also serves for the pivoting attachment of the head of the spring arm (not shown in more detail in the drawing) between the flanges of the closure piece 4. In Figure 1, the said spring-arm head is denoted by the dashed lines 7. In this case, a wearing plate 9 is arranged between the spring head 7 and the bracket plate 3''.

On their screw-thread ends which project outside the inner closure-piece flanges 4b, the two hinge bolts 6 bear a nut 8. Instead of the nuts 8, the closure-piece flanges 4b located on the inside could be provided with a screw thread, while the heads of the hinge bolts could also lie on the inside.

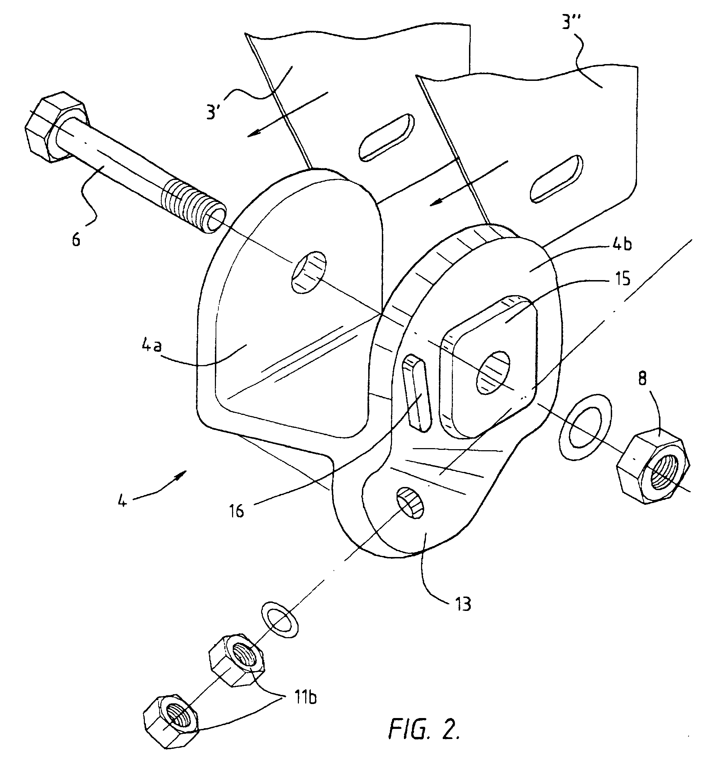

A cross beam 10, which is preferably not round, extends between the mutually facing flanges 4b of the two closure pieces 4. In the example shown in Figures 1 and 2, the cross beam 10 is a U-beam with its opening directed towards the front.

The cross beam 10 is clamped between the two closure pieces 4 and thus forms a rigid unit. To clamp the two closure pieces 4 and the cross beam 10 together, use is made of the strut rods which are denoted by 11 and are also customary in the known axle suspensions of the type under consideration here, specifically for absorbing the transverse forces which act on the spring carrier/cross beam assembly during operation.

In the example shown in Figure 1, the strut rods 11 each engage, by means of a hook-shaped end 11a, in a hole 12a in an engagement plate 12 which is attached to the inside of the web of the longitudinal beam 1 at the location of the upper flange 1b. To allow the strut rods 11 also to function as means for clamping together the closure pieces and the cross beam, the closure pieces 4 are provided with a projection 13 on which the bottom end, which is provided with a screw thread, of a strut rod 11 can engage.

The projection 13 has an inclined bearing surface 13a, which is perpendicular to the centre axis of the strut rod 11 in question, for a tightening nut 11b which is positioned on the screw-thread end of the strut rod 11 in question. If appropriate, the bearing surface 13a may be spherically curved and may interact with a complementary washer in order to obtain a self-adjusting support for the tightening nut.

As can be seen more particularly from Figure 2, the projection 13 is located on the underside of the web of the closure piece 4 and is formed by a downwardly directed extension of the closure-piece flange 4b which lies on the inside. The engagement projection 13 is located to the side of the vertical plane through the hinge-bolt holes, with the result that the strut rod 11 in question can remain clear of the cross beam 10 which is to be clamped between the two closure pieces 4. As can also be seen in Figure 2, that flange 4b of the U-shaped closure piece 4 which is located on the inside is provided, on its outer surface, with a central elevation 15 and an elevation 16 which is located a short distance behind it. The central elevation 15 is formed so as to correspond to the inner-wall profile of the U-shaped cross beam 10, which has its web in a vertical position, while the elevation 16 serves as a retaining lug for the upright web of the U-beam 10. Figure 2 also shows the lower parts of the outer and inner bracket plates 3' and 3'', respectively, which are provided with horizontal slots for attachment to the respective flanges 4a and 4b of the U-shaped closure piece 4 by means of the hinge bolt 6. These slots allow accurate alignment of the axle suspension.

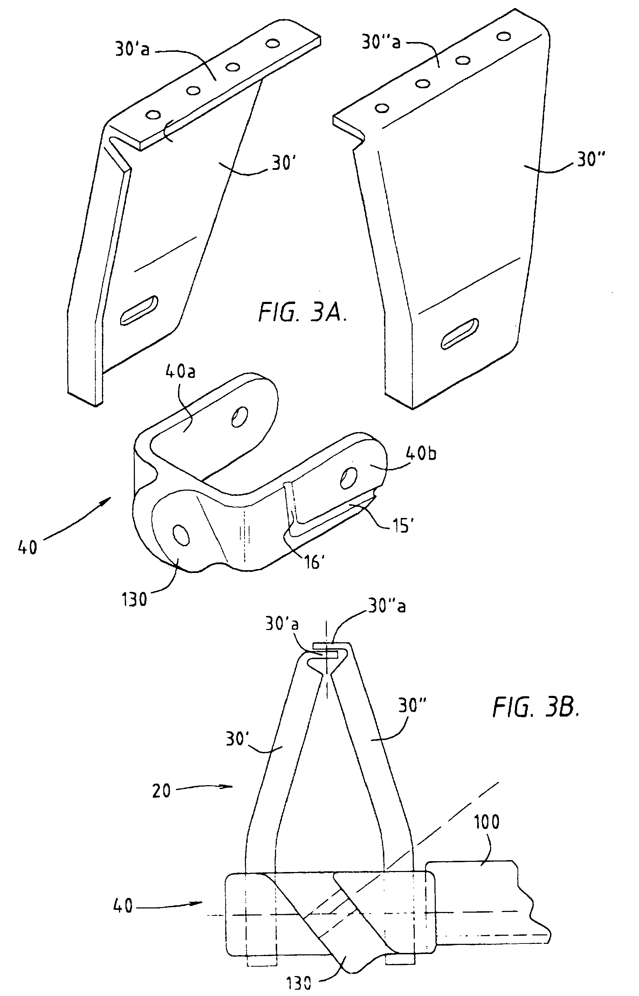

Reference is now made to Figures 3A, B, which illustrate a variant of the spring carrier shown in Figures 1 and 2. The two bracket plates 30' and 30'' substantially correspond to the bracket plates 3' and 3'' shown in the first embodiment. One of the differences is that the upper parts of the bracket plates 30' and 30'' both bend obliquely upwards and inwards, while the front edge sections of these plates bend towards one another.

However, the main difference relates to the U-shaped closure piece 40 which, in the mounted position, lies with the flanges 40a and 40b in a horizontal position. In this case, the closure piece 40 is positioned with the web and the engagement projection 130 which projects therefrom directed forwards. In the mounted position (Figure 3B), the two bracket plates 30' and 30" bear against the insides of the respective flanges 40a and 40b of the closure piece 40. In the embodiment shown in Figures 3A, B, that flange of the closure piece 40 which is located on the inside is provided with two grooves 15' and 16' which are at right-angles to one another and in which an end edge of a flange and an end edge of the web of a U-shaped cross beam can engage. Obviously, similar grooves could also be used in the first embodiment.

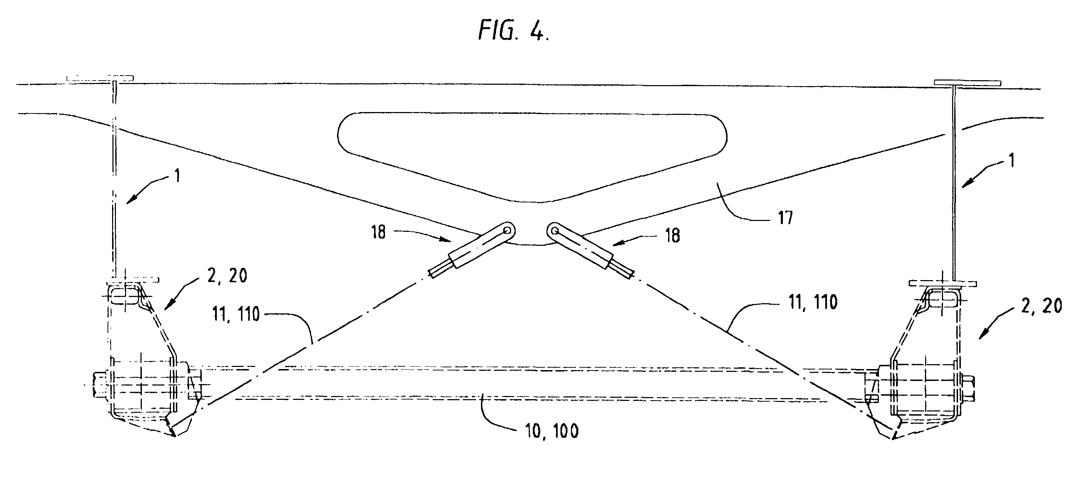

The axle suspension shown in Figure 4 differs from that shown in Figure 1 only with regard to the points of engagement of the top ends of the strut rods. In the embodiment shown in Figure 4, there is a truss-like cross beam 17 between the two longitudinal chassis beams 1, the height of which cross beam is considerably greater, in the downwards direction, in the centre longitudinal plane. The two points of engagement for the strut rods 110 are in this case located closely together on the downwardly directed vertex of the cross beam 17. In this case, the strut rods 110 engage on the cross beam 17 by means of a swivel joint 18 and associated connecting pins. The two spring carriers 2 and 20, with the cross beam between them, may be of corresponding design to Figures 1 and 2 or Figure 3, it being possible, if appropriate, for the bottom ends of the strut rods 110 to engage in the manner of hooks on the engagement projections 13 and 130, respectively.

The design shown in Figure 4 has the advantage over that shown in Figure 1 that the strut rods 110 do not cross over one another, resulting in a completely symmetrical structure.

## Claims

1. Axle suspension for a vehicle, more particularly for a vehicle with an air spring system, comprising two brackets (2;20) which are each attached to a longitudinal chassis beam (1), are connected to one another from below by a cross beam (10;110) and are each provided with a hinge bolt (6) for an arm which supports the vehicle axle, and a tightenable strut-rod element (11;110), which runs at an angle towards the longitudinal chassis beam (1) bearing the other bracket (2;20) and engages in the vicinity of each bracket, at a point which is located in the vicinity of the connection between the said bracket and the cross beam, the hinge bolts (6) are being accommodated in substantially U-shaped closure pieces (4;40) which are arranged at the bottom end of the brackets (2) in question, which closure pieces (4;40) have engagement projections (13;130) for the respective strut ends, the cross beam (10;100) being clamped between the mutually facing flanges (4b;40b) of the two closure pieces (4;40) by means of the strut rods (11;110), when tigthened,

2. Axle suspension according to claim 1, **characterized in that** the mutually facing flanges (4b;40b) of the two closure pieces (4;40) are provided, on their outer surfaces, with elevations (15;16) and/or recesses (15';16')which are complementary to the ends of the cross beam (10;100).

3. Axle suspension according to claims 1-2, **characterized in that** the engagement projection (13;130) for the strut element (11;110) projects from that side of the web of the U-shaped closure piece (4;40) which is remote from the flanges (4a, 4b; 40a, 40b).

4. Axle suspension according to claims 1-3, **characterized in that** each closure piece (4;40) is secured with each of its flanges on a plate-like bracket part (3',3'';30',30'') which hangs down from the relevant longitudinal chassis beam (1).

5. Axle suspension according to claim 4, **characterized in that** the closure-piece flanges (4a,4b;40a,40b) are attached to the respective bracket plates (3', 3"; 30', 30") by means of the hinge bolts (6).

6. Axle suspension according to claim 5, **characterized in that** in each case the inner (3'';30'') of the two bracket plates bears against the inside of the inner flange (4b;40b) of the relevant closure piece (4;40).

## Patentansprüche

1. Achsaufhängung für ein Fahrzeug , spezieller für ein Fahrzeug mit einem Luftfedersystem, mit zwei Tragbügeln (2; 20), die an einem Fahrgestell-Längsträger (1) befestigt sind, von unten miteinander durch einen Querträger (10; 100) verbunden und jeder mit einem Gelenkbolzen (6) für einen Arm versehen sind, der die Fahrzeugachse trägt, und mit einem spannbaren Verstrebungstangenelement (11; 110), welches in einem Winkel zum Fahrgestell-Längsträger (1), welcher den anderen Tragbügel (2; 20) trägt, verläuft und in der Nähe jedes Tragbügels an einer Stelle in Eingriff ist, die in der Nähe der Verbindung zwischen dem genannten Tragbügel und dem Querträger gelegen ist, wobei die Gelenkbolzen (6) in im wesentlichen U-förmigen Abschlußstücken (4; 40) aufgenommen sind, die am unteren Ende der fraglichen Tragbügel (2) angeordnet sind, welche Abschlußstücke (4; 40) Eingriffsvorsprünge (13; 130) für die betreffenden Strebenenden aufweisen, wobei der Querträger (10; 100) zwischen den einander zugewandten Flanschen (4b; 40b) der zwei Abschlußstücke (4; 40) mittels der Verstrebungsstangen (11; 110) eingespannt ist, wenn diese festgespannt sind.

2. Achsaufhängung nach Anspruch 1, **dadurch gekennzeichnet, dass** die einander zugewandten Flansche (4b; 40b) der zwei Abschlußstücke (4; 40) an ihren äußeren Oberflächen mit Erhebungen (15; 16) und/oder Vertiefungen (15'; 16') versehen sind, die zu den Enden des Querträgers (10; 100) komplementär sind.

3. Achsaufhängung nach Ansprüchen 1-2, **dadurch gekennzeichnet, dass** der Eingriffsvorsprung (13; 130) für das Verstrebungselement (11; 110) von derjenigen Seite des Schenkels des U-förmigen Abschlußstückes (4; 40) vorsteht, welcher von den Flanschen (4a, 4b; 40a, 40b) entfernt gelegen ist.

4. Achsaufhängung nach Ansprüchen 1-3, **dadurch gekennzeichnet, dass** jedes Abschlußstück (4; 40) mit jedem seiner Flansche an einem plattenartigen Trägerteil (3', 3"; 30', 30") befestigt ist, welcher vom entsprechenden Fahrgestell-Längsträger (1) nach unten hängt.

5. Achsaufhängung nach Anspruch 4, **dadurch gekennzeichnet, dass** die Abschlußstück-Flansche (4a, 4b; 40a, 40b) an den betreffenden Trägerplatten (3', 3"; 30', 30") mittels der Gelenkbolzen (6) angebracht sind.

6. Achsaufhängung nach Anspruch 5, **dadurch gekennzeichnet, dass** sich in jedem Falle die innere (3"; 30") der zwei Trägerplatten gegen die Innenseite des inneren Flansches (4b; 40b) des entsprechenden Abschlußstückes (4; 40) abstützt.

## Revendications

1. Suspension pour essieu destinée à un véhicule, de manière plus particulière à un véhicule comportant un système à ressort pneumatique, comprenant deux supports (2 ; 20), chacun étant fixé à une poutre de châssis longitudinale (1), qui sont connectés l'un à l'autre par en dessous par une poutre transversale (10 ; 110), et qui comportent chacun un boulon d'articulation (6) destiné à un bras qui supporte l'essieu du véhicule, et une barre d'entretoise pouvant être tendue (11 ; 110) , qui court suivant un certain angle vers la poutre de châssis longitudinale (1) qui supporte l'autre support (2 ; 20), et qui s'engage à proximité de chaque support à un point qui est situé à proximité de la connexion entre ledit support et la poutre transversale, les boulons d'articulation (6) étant logés dans des pièces de logement ayant essentiellement une forme de U (4 ; 40) qui sont aménagées à l'extrémité d'embase des supports (2) en question, lesquelles pièces de logement (4 ; 40) comprennent des saillies d'engagement (13 ; 130) destinées aux extrémités de l'entretoise respective, la poutre transversale (10; 100) étant fixée entre les brides (4b ; 40b) qui se font face mutuellement des deux pièces de logement (4 ; 40) au moyen des barres d'entretoise (11 ; 110) lorsqu'elles sont tendues.

2. Suspension pour essieu selon la revendication 1, **caractérisée en ce que** les brides (4b ; 40b) des deux pièces de logement (4 ; 40) qui se font mutuellement face comportent, sur leur surface extérieure, des projections (15 ; 16) et / ou des encoches (15' ; 16') qui sont complémentaires aux extrémités de la poutre transversale (10 ; 100).

3. Suspension pour essieu selon les revendications 1-2, **caractérisée en ce que** la saillie d'engagement (13 ; 130) destinée à l'élément d'entretoise (11 ; 110) est en saillie à partir de ce côté du corps de la pièce de logement en forme de U (4 ; 40) qui est éloigné des brides (4a, 4b ; 40a, 40b).

4. Suspension pour essieu selon les revendications 1-3, **caractérisée en ce que** chaque pièce de logement (4 ; 40) est fixée avec l'une de ses brides sur une partie de support en forme de plaque (3', 3" ; 30', 30") qui descend à partir de la poutre de châssis longitudinale concernée (1).

5. Suspension pour essieu selon la revendication 4, **caractérisée en ce que** les brides de pièce de logement (4a, 4b ; 40a, 40b) sont fixées sur les plaques de support respectives (3', 3" ; 30', 30") au moyen des boulons d'articulation (6).

6. Suspension pour essieu selon la revendication 5, **caractérisée en ce que**, dans chaque cas, l'intérieur (3" ; 30") des deux plaques de support est en portée contre l'intérieur de la bride interne (4b ; 40b) de la pièce de logement concernée (4 ; 40).
